# EUROPÄISCHE PATENTANMELDUNG

(11) **EP 3 339 385 A1**
(43) Veröffentlichungstag der Anmeldung: **27.06.2018**
(21) Anmeldenummer: 16206049.5
(22) Anmeldetag: 22.12.2016
(51) Int. Cl.: C09D 163/00, C09D 5/18, C08K 3/00, C08K 5/00

(54) **EPOXIDHARZZUSAMMENSETZUNG AUF WASSERBASIS ZUR BESCHICHTUNG VON ANORGANISCHEN BRANDSCHUTZELEMENTEN**

(71) Anmelder: HILTI Aktiengesellschaft, 9494 Schaan (LI)
(72) Erfinder: Thiemann, Frank, 86899 Landsberg/Lech (DE); Simon, Sebastian, 86807 Buchloe Lindenberg (DE); Schlenk, Stefan, 86199 Augsburg (DE)
(74) Vertreter: Hilti Aktiengesellschaft Corporate Intellectual Property

(57) **Zusammenfassung**

Eine Epoxidharzzusammensetzung auf Wasserbasis umfasst wenigstens ein Epoxidharz, einen Härter für das Epoxidharz, Wasser und wahlweise weitere Zusätzen. Ferner enthält die Epoxidharzzusammensetzung wenigstens eine intumeszierende Komponente. Die Epoxidharzzusammensetzung dient zur Beschichtung eines anorganischen Brandschutzelements, das wenigstens ein hydraulisches Bindemittel und weitere Füllstoffe umfasst. Die Epoxidharzzusammensetzung kann auf das noch restfeuchte Brandschutzelement aufgebracht werden.

## Beschreibung

Die Erfindung betrifft eine Epoxidharzzusammensetzung auf Wasserbasis zur Beschichtung von anorganischen Brandschutzelementen. Des Weiteren betrifft die Erfindung ein Verbundmaterial mit einem Substrat und einem auf dem Substrat aufgebrachten anorganischen Brandschutzelement, das mit der Epoxidharzzusammensetzung beschichtet ist, und ein Verfahren zur Herstellung des Verbundmaterials.

Für den Brandschutz von Stahlkonstruktionen im Baubereich werden passive Brandschutzelemente auf der Basis von anorganischen Materialien verwendet, die auf die Stahlkonstruktionen aufgetragen werden. Diese anorganischen Brandschutzelemente bestehen üblicherweise aus einem hydraulischen Bindemittel wie Gips oder Zement und verschiedenen Füllstoffen. Zum Schutz gegen das Eindringen von Feuchtigkeit und anderen Umwelteinflüssen werden die passiven Brandschutzelemente zusätzlich mit einer Beschichtung versehen.

Aus der WO 2015/160959 A sind Epoxidharzzusammensetzungen auf Wasserbasis zur Beschichtung von anorganischen Brandschutzelementen bekannt. Es wird vorgeschlagen, die Epoxidharzzusammensetzung auf das noch feuchte Brandschutzelement aufzutragen. Dadurch kann die Trocknung des Brandschutzelements gesteuert und die Schrumpfungsrate verringert werden. Das im feuchten Zustand beschichtete Brandschutzelement ist somit weniger anfällig für Rissbildungen.

Die auf dem Brandschutzelement aufgetragene Epoxidharzzusammensetzung kann jedoch die Brandschutzeigenschaften des anorganischen Brandschutzelements beeinträchtigen. Die der vorliegenden Erfindung zugrundeliegende Aufgabe besteht somit darin, eine Beschichtung für anorganische Brandschutzelemente bereitzustellen, die einfach und schnell aufgebracht werden kann und die außerdem auch bei geringen Schichtdicken eine gute Brandschutzwirkung zeigt.

Überraschenderweise wird diese Aufgabe durch eine Epoxidharzzusammensetzung gemäß Anspruch 1 gelöst.

Weitere Ausführungsformen der Erfindung sind in den Unteransprüchen angegeben, die wahlweise miteinander kombiniert werden können.

Gegenstand der Erfindung ist daher eine Epoxidharzzusammensetzung auf Wasserbasis zur Beschichtung von anorganischen Brandschutzelementen, mit wenigstens einem Epoxidharz, einem Härter für das Epoxidharz, Wasser und wahlweise weiteren Zusätzen, die dadurch gekennzeichnet ist, dass die Epoxidharzzusammensetzung ferner wenigstens eine intumeszierende Komponente enthält.

Mit der Erfindung können somit beschichtete Brandschutzelemente bereitgestellt werden, deren Trocknung und Schrumpfungsrate wirksam gesteuert werden kann, und deren Beschichtung darüber hinaus auch selbst zu einem wirksamen Brandschutz beiträgt, da die in der Epoxidharzzusammensetzung enthaltene intumeszierende Komponente im Brandfall und/oder bei Einwirkung einer starken Wärmestrahlung eine sich aufblähende isolierende Dämmschicht aus einem schwer entflammbaren Material ausbildet. Diese Dämmschicht schützt das darunterliegende Brandschutzelement und/oder die Stahlkonstruktion über eine gewisse Zeit vor der Hitzeeinwirkung und verlängert somit die Standzeit des anorganischen Brandschutzelements. Gleichzeitig wird eine Veränderung der mechanischen und statischen Eigenschaften des mit dem beschichteten Brandschutzelement versehenen Konstruktionsmaterials durch Hitzeeinwirkung verhindert oder verzögert. Das mit der erfindungsgemäßen Epoxidharzzusammensetzung beschichtete Brandschutzelement kann bei gleicher Leistung somit auch mit geringerer Schichtdicke ausgebildet werden, wodurch Materialkosten und Gewicht eingespart werden können.

Die intumeszierende Komponente kann eine chemisch intumeszierende Komponente und/oder eine physikalisch intumeszierende Komponente umfassen. Bei chemisch intumeszierenden Komponenten wird die Bildung der isolierenden Dämmschicht durch die chemischen Reaktionen eines Gemisches von aufeinander abgestimmten Verbindungen ausgelöst, die bei Wärmeeinwirkung miteinander reagieren. Physikalisch intumeszierende Komponenten sind auch als Blähgraphit bezeichnete Einlagerungsverbindungen auf Basis von Kohlenstoff, die sich bei Wärmeeinwirkung auf ein Vielfaches ihres ursprünglichen Volumens aufblähen und dadurch ebenfalls eine isolierende Schutzschicht bilden. Chemisch und physikalisch intumeszierende Komponenten können jeweils alleine oder zusammen als Kombination eingesetzt werden.

Gemäß einer bevorzugten Ausführungsform ist die in der erfindungsgemäßen Epoxidharzzusammensetzung enthaltene intumeszierende Komponente eine aus einem Gemisch von mehreren Verbindungen gebildete chemisch intumeszierende Komponente.

Die chemisch intumeszierende Komponente umfasst bevorzugt eine Kohlenstoffquelle, einen Säurebildner und ein Treibmittel. Bei Wärmeeinwirkung wird der Säurebildner thermisch zersetzt und setzt eine Säure frei, die als Katalysator für die Verkohlung der Kohlenstoffquelle unter Abspaltung von Wasser dient. Gleichzeitig zersetzt sich das Treibmittel unter Bildung von inerten Gasen, die ein Aufblähen des verkohlten Materials und gegebenenfalls des durch die Wärmeeinwirkung erweichten Epoxidharzes unter Bildung einer voluminösen isolierenden Aschekruste bewirkt.

Zusätzlich kann die intumeszierende Komponente noch einen anorganischen Gerüstbildner enthalten, der eine Stabilisierung der Aschekruste bewirkt.

Als Kohlenstoffquelle werden bevorzugt die in intumeszierenden Brandschutzformulierungen üblicherweise verwendeten und dem Fachmann bekannten Verbindungen eingesetzt, wie beispielsweise Saccharide, Oligosaccharide und Polysaccharide, insbesondere Stärke und Zucker, Zuckeralkohole wie Sorbitol, Alkylpolyole wie Pentaerythrit, Dipentaerythrit und Tripentaerythrit, polymere sauerstoffhaltige Verbindungen wie Polyvinylacetat, Polyvinylalkohol und EO-PO-Polyole, und Mischungen davon. Bevorzugte Kohlenstoffquellen sind Pentaerythrit, Dipentaerythrit und deren Mischungen.

Als Säurebildner können insbesondere Derivate von anorganischen, nichtflüchtigen Säuren dienen, insbesondere von Schwefelsäure, Phosphorsäure oder Borsäure. Bevorzugt sind Derivate der Phosporsäure, insbesondere Ammoniumphosphate wie Monoammoniumphosphat, Diammoniumphosphat und Ammoniumpolyphosphat, sowie Melaminphosphat, Melaminharzphosphate, Kaliumphosphat, Polyolphosphate, wie beispielsweise Pentaerythritphosphat, Glycerinphosphat, Sorbitolphosphat, Mannitolphosphat, Dulcitphosphat, Neopentylglycolphosphat, Ethylenglycolphosphat, Dipentaerythritphosphat und Mischungen davon. Als Säurebildner auf Basis von Schwefelsäure können Ammoniumsulfat, Ammoniumsulfamat, Nitroanilinbisulfat, 4'-Nitroanilin-2-sulfonsäure und 4,4-Dinitrosulfanilamid eingesetzt werden. Ein Beispiel für eine Borsäureverbindung ist Melaminborat. Ein bevorzugter Säurebildner ist Ammoniumpolyphosphat.

Als Treibmittel der intumeszierenden Komponente können insbesondere stickstoffhaltige Verbindungen wie Cyanursäure, Isocyanursäure und deren Derivate, Melamin und dessen Derivate wie Cyanamid, Dicyanamid und Dicyandiamid, Guanidin und dessen Derivate, Biguanid, Melamincyanurat, Cyansäuresalze, Cyansäureester und Cyansäureamide, Hexamethoxymethylmelamin, Dimelaminpyrophosphat, Melaminpolyphosphat, Melaminphosphat und Mischungen davon eingesetzt werden. Bevorzugtes Treibmittel ist Melamin.

Einige der oben genannten Verbindungen können mehrere Funktionen in der intumeszierenden Komponente erfüllen. Beispielsweise kann Melaminpolyphosphat sowohl als Säurebildner als auch als Treibmittel dienen.

Als Gerüstbildner können insbesondere Metallhydroxide und/oder Borate eingesetzt werden, wie beispielsweise Aluminiumtrihydroxid oder Zinkborat. Weitere geeignete Gerüstbildner sind niedrigschmelzende Gläser, wie beispielsweise Phosphatgläser, Sulfatgläser, Melaminpolyzinksulfate, Ferrogläser oder Calciumborosilikate. Bevorzugte Gerüstbildner sind Zinkborat und Aluminiumtrihydroxid, das bei Wärmeeinwirkung unter Freisetzung von Wasser reagiert und somit eine zusätzliche Brandschutzwirkung bereitstellt.

Alternativ oder zusätzlich kann die intumeszierende Komponente einen Blähgraphit als physikalisch intumeszierende Komponente enthalten. Der Blähgraphit kann in Form von Flocken oder Blättchen mit einem Durchmesser im Bereich von 0,1 bis 5 mm vorliegen. Geeignete Blähgraphite sind im Handel erhältlich.

Vorteilhaft kann der Blähgraphit zusammen mit einem der oben beschriebenen Gerüstbildner verwendet werden.

Bevorzugt enthält die intumeszierende Komponente die Kohlenstoffquelle in einem Anteil von 0,5 bis 10 Gew.-%, den Säurebildner in einem Anteil von 20 bis 99 Gew.-%, das Treibmittel in einem Anteil von 0,5 bis 10 Gew.-%, Blähgraphit in einem Anteil von 0 bis 35 Gew.-% und den Gerüstbildner in einem Anteil von 0 bis 80 Gew.-%, vorzugsweise 0 bis 40 Gew.-%, jeweils bezogen auf das Gewicht der intumeszierenden Komponente.

Falls Blähgraphit zusammen mit einem Gerüstbildner als intumeszierende Komponente eingesetzt wird, beträgt der Anteil des Blähgraphits von 2,0 bis 35,0 Gew.-%, vorzugsweise 15 bis 25 Gew.-%, und der Anteil des Gerüstbildners beträgt von 35 bis 98 Gew.-%, bevorzugt von 75 bis 85 Gew.-%.

Die intumeszierende Komponente kann in der Epoxidharzzusammensetzung in einem Anteil von 5 bis 50 Gew.-% enthalten sein, bevorzugt in einem Anteil von 5 bis 35 Gew.-%, bezogen auf das Gesamtgewicht der Zusammensetzung, bevorzugt in einem Anteil von 10 bis 35 Gew.-%.

Das in der Epoxidharzzusammensetzung enthaltene Epoxidharz umfasst bevorzugt eine oder mehrere mindestens difunktionelle Epoxidverbindungen. Die mindestens difunktionelle Epoxidverbindung kann aliphatisch, cycloaliphatisch oder aromatisch sein und als monomere, oligomere oder polymere Verbindung vorliegen.

Besonders bevorzugt ist die mindestens difunktionelle Epoxidverbindung aus den Polyglycidylethern eines mindestens zweiwertigen Alkohols oder Phenols, wie Novolak, Bisphenol F oder Bisphenol A, oder Gemischen solcher Epoxide ausgewählt, die beispielsweise durch Umsetzung der entsprechenden mehrwertigen Alkohole mit Epichlorhydrin erhalten werden können. Geeignete Beispiele sind Hexandioldiglycidylether, Trimethylolpropantriglycidylether, Novolak-Epoxidharze, Bisphenol-A-Epichlorhydrinharze und/oder Bisphenol-F-Epichlorhydrinharze, beispielsweise mit einem durchschnittlichen Molekulargewicht von Mₙ ≤ 2000 g/mol.

Die Epoxidverbindungen können beispielsweise ein Epoxidäquivalent von 120 bis 2000, vorzugsweise 150 bis 400, weiter bevorzugt von 155 bis 195, besonders bevorzugt von 165 bis 185 aufweisen.

Das Epoxidharz kann wahlweise weiteren Glycidylether als Reaktivverdünner beinhalten. Insbesondere können auch einige der oben genannten Epoxidverbindungen als Reaktivverdünner eingesetzt werden, wie beispielsweise Trimethylolpropantriglycidylether oder Hexandioldiglycidylether, die eine geringere Viskosität als aromatische Gruppen enthaltende Epoxide aufweisen. Weiter Beispiele für geeignete Reaktivverdünner sind Glycerintriglycidylether, Pentaerythrittetraglycidylether, 1,4-Butandioldiglycidylether, Cyclohexandimethanoldiglycidylether, Neopentylglycoldiglycidylether, und Propylenglycoldiglycidylether.

Gemäß einer besonders bevorzugten Ausführungsform enthält das Epoxidharz einen Bisphenol-A-diglycidylether, einen Bisphenol-F-diglycidylether oder eine Mischung davon, wahlweise zusammen mit einem Reaktivverdünner, beispielsweise einem Alkylglycidylether.

Der Anteil des Epoxidharzes in der Epoxidharzzusammensetzung beträgt bevorzugt von 10 bis 40 Gew.-%, bezogen auf das Gesamtgewicht der Zusammensetzung.

Der Härter für das Epoxidharz umfasst bevorzugt solche Verbindungen, die mit den Epoxidgruppen des Epoxidharzes in einer Polyaddition reagieren. Geeignet sind insbesondere polyfunktionelle, d. h. mindestens difunktionelle, primäre oder sekundäre Amine, insbesondere aliphatische oder cycloaliphatische Amine. Der Härter kann insbesondere ein oder mehrere lineare oder verzweigte Polyalkylenpolyamine mit drei oder mehr aktiven, an Stickstoff gebundenen Wasserstoffatomen pro Molekül enthalten. Beispiele für geeignete polyfunktionelle Amine sind Ethylendiamin (EDA), Diethylentriamin (DETA), Triethylentetramin (TETA), Triethylendiamin, Tetraethylenpentamin, Polyoxypropylendiamin, Polyoxypropylentriamin, höhere Polyethylenpolyamine, Isophorondiamin, Diaminomethylcyclohexan, Piperazin, N-Aminoethylpiperazin, Diaminomethylbenzol, N',N'-Bis(2-aminoethyl)ethan-1,2-diamin, 2-Methylpentan-1,5-diamin und Mischungen davon.

Des Weiteren können als Härter für das Epoxidharz auch Polyamidoamine eingesetzt werden, die aus der Umsetzung von Dicarbonsäuren mit überschüssigem Polyamin erhältlich sind. Als Ausgangsprodukte zur Herstellung der Polyamidoamide können insbesondere Fettsäuren mit 8 bis 24 Kohlenstoffatomen und einer oder mehreren Dicarbonsäuregruppen dienen. Die Polyamine sind insbesondere aus der Gruppe der aliphatischen Polyamine ausgewählt, wie beispielsweise Ethylendiamin, Diethylentriamin, Triethylentetramin und Tetraethylenpentamin.

Es können auch Mischungen von zwei oder mehr der genannten, zur Epoxidhärtung gebräuchlichen Verbindungen verwendet werden.

Der Anteil des Härters in der Epoxidharzzusammensetzung beträgt bevorzugt von 10 bis 40 Gew.-%, bezogen auf das Gesamtgewicht der Zusammensetzung.

Des Weiteren kann die Epoxidharzzusammensetzung einen oder mehrere Beschleuniger für die Vernetzungsreaktion zwischen dem Epoxidharz und dem Härter enthalten. Geeignete Beschleuniger sind insbesondere tertiäre Aminophenole wie Tris-2,4,6-dimethylaminomethylphenol, Organophosphine, Lewis-Basen oder -Säuren, wie Phosphorsäureester oder Gemische davon. Des Weiteren können Zinkverbindungen als Beschleuniger verwendet werden, wie beispielsweise Zinkoxid oder Zinksalze von Dithiocarbamat, insbesondere Zinkdibutyldithiocarbamat, Zinkdiethyldithiocarbamat, Zinkdimethyldithiocarbamat und Zinkdiamyldithiocarbamat.

Der Beschleuniger liegt in der Epoxidharzzusammensetzung bevorzugt in einem Anteil von 0 bis 5 Gew.-% vor, bezogen auf das Gesamtgewicht der Zusammensetzung.

Geeignete Epoxidverbindungen, Reaktivverdünner, Härter und Beschleuniger sind auch in dem Standardwerk von Michael Dornbusch, Ulrich Christ und Rob Rasing, "Epoxidharze", Vincentz Network GmbH & Co KG (2015), ISBN 13: 9783866308770, zu finden. Diese Verbindungen werden hier durch Bezugnahme aufgenommen.

Die erfindungsgemäße Epoxidharzzusammensetzung ist vorzugsweise als Zweikomponentenmasse formuliert, so dass das Epoxidharz in einer Harzkomponente (A) und der Härter in einer Härterkomponente (B) vor dem Gebrauch der Epoxidharzzusammensetzung reaktionsinhibierend voneinander getrennt sind. Beispielsweise liegen die Harzkomponente (A) und die Härterkomponente (B) in Patronen, Kartuschen oder Folienbeuteln vor, die zwei oder mehrere voneinander getrennte Kammern umfassen, in welchen die Harzkomponente und die Härterkomponente getrennt voneinander angeordnet sind. Der Beschleuniger liegt vorzugsweise in der Härterkomponente (B) vor.

Der Wasseranteil der Epoxidharzzusammensetzung kann in einem Bereich von 10 bis 40 Gew.-% liegen. Insbesondere kann die Härterkomponente (B) als eine wässrige Lösung oder Dispersion vorliegen, wobei der Wasseranteil in der Härterkomponente in einem Bereich von 5 bis etwa 50 Gew.-% liegen kann.

Alternativ oder zusätzlich kann das Wasser auch zur Harzkomponente (A) zugesetzt sein.

Das Verhältnis von Harzkomponente (A) zu Härterkomponente (B) in der Epoxidharzzusammensetzung kann in einem weiten Bereich variieren. Insbesondere kann der Anteil der Harzkomponente (A) zur Härterkomponente (B) in der Zusammensetzung in einem Bereich von 1:10 bis 10:1 variieren, insbesondere in einem Bereich von 1:5 zu 5:1. Ganz besonders bevorzugt wird der Härter in der Härterkomponente (B) in einem stöchiometrischen Verhältnis zum Epoxidharz in der Harzkomponente (A) eingesetzt, um eine vollständige Vernetzung und Aushärtung zu erreichen.

Als weitere Zusätze kann die Epoxidharzzusammensetzung anorganische Füllstoffe wie Titanoxid, Ton, Zinkoxid, Bariumsulfat, Kalkstein, Dolomit, Talkum, Ruß, Siliziumoxid, Glimmer, Wollastonit, Quarz und Mischungen davon enthalten.

Ferner können die weiteren Zusätze Verbindungen aus der Gruppe der Weichmacher, nichtreaktive Verdünnungsmittel, Flexibilisatoren, Stabilisatoren, Rheologiehilfsmittel, Netzmittel, färbenden Zusätze wie Farbstoffe oder Pigmente, Entschäumer, Verdicker, Korrosionsschutzmittel und Gemische davon umfassen.

Die weiteren Zusätze können in der Harzkomponente (A), in der Härterkomponente (B) oder in beiden Komponenten enthalten sein. Der Anteil der weiteren Zusätze in der Epoxidharzzusammensetzung beträgt vorzugsweise von 0 bis 30 Gew.-%, bevorzugt 10 bis 20 Gew.-%.

Gemäß einer besonders bevorzugten Ausführungsform umfasst die erfindungsgemäße Epoxidharzzusammensetzung das Epoxidharz in einem Anteil von 10 bis 40 Gew.-%, den Härter in einem Anteil von 10 bis 40 Gew.-%, den Beschleuniger in einem Anteil von 0 bis 5 Gew.-%, Wasser in einem Anteil von 10 bis 40 Gew.-%, die intumeszierende Komponente in einem Anteil von 5 bis 50 Gew.-% und die weiteren Zusätze in einem Anteil von 0 bis 30 Gew.-%, jeweils bezogen auf das Gesamtgewicht der Zusammensetzung. Besonders bevorzugt besteht die Epoxidharzzusammensetzung aus den genannten Komponenten.

Die intumeszierende Komponente ist bevorzugt eine chemisch intumeszierende Komponente mit einem Säurebildner, bevorzugt Ammonium(poly)phosphat, einer Kohlenstoffquelle, bevorzugt Pentaerythrit und/oder Dipentaeryhrit, einem Treibmittel, vorzugsweise Melamin und wahlweise einem Gerüstbildner wie Zinkborat oder Aluminiumtrihydroxid, oder eine physikalisch intumeszierende Komponente mit Blähgraphit und wahlweise einem Gerüstbildner wie Zinkborat oder Aluminiumtrihydroxid. Gemäß einer besonders bevorzugten Ausführungsform wird Blähgraphit zusammen mit der chemisch intumeszierenden Komponente eingesetzt.

Zur bestimmungsgemäßen Anwendung der Epoxidharzzusammensetzung werden die das Epoxidharz enthaltende Harzkomponente (A) und die den Härter enthaltende Härterkomponente (B) aus den getrennten Kammern entleert und in einer geeigneten Vorrichtung, beispielsweise einem Statikmischer oder einem Dissolver, gemischt. Die Mischung aus der Harzkomponente und der Härterkomponente wird danach auf das vorzugsweise noch restfeuchte anorganische Brandschutzmaterial aufgetragen. Das Auftragen kann durch Aufsprühen, Aufrollen oder Aufstreichen erfolgen. Der Härter in der Härterkomponente reagiert mit den Epoxidverbindungen in der Harzkomponente unter Polyaddition, sodass die Zusammensetzung unter Umgebungsbedingungen innerhalb weniger Stunden aushärtet und das Brandschutzmaterial vor zu schneller Austrocknung schützt. Wegen der Verwendung von wasserbasierten Epoxidharzzusammensetzungen wird die Aushärtung der Epoxidharzzusammensetzung durch den Wassergehalt des anorganischen Brandschutzmaterials nicht beeinträchtigt. Überschüssiges Wasser aus der Epoxidharzzusammensetzung kann von dem anorganischen Brandschutzmaterial aufgenommen oder in die Umgebung abgegeben werden.

Das anorganische Brandschutzmaterial umfasst vorzugsweise ein hydraulisches Bindemittel und einen oder mehrere Füllstoffe. Bevorzugt ist das hydraulische Bindemittel ein Gips, Trass, Puzzolan oder Zement. Als Füllstoffe für das anorganische Brandschutzmaterial können Vermiculit, Glimmer, Calciumsilikat, Polystyrolkugeln, Mineralwolle, Glasfasern, Keramikfasern, Aluminiumoxide, Ton und Quarz verwendet werden.

Zur Anwendung wird das anorganische Brandschutzmaterial mit Wasser vermischt und in bekannter Weise auf ein zu schützendes Substrat aufgetragen, beispielsweise eine Stahlunterkonstruktion. Die Schichtdicke des anorganischen Brandschutzmaterials liegt im Trockenzustand üblicherweise bei ein bis mehreren Zentimetern.

Das anorganische Brandschutzmaterial kann bei der Beschichtung mit der Epoxidharzzusammensetzung einen Wassergehalt von 20 Gew.-% oder mehr aufweisen und ist somit noch nicht vollständig abgebunden. Bevorzugt liegt der Wassergehalt des anorganischen Brandschutzmaterials bei Beschichtung mit der Epoxidharzzusammensetzung in einem Bereich von 20 bis 70 Gew.-%, bezogen auf das Gewicht des Brandschutzmaterials.

Die Beschichtung des anorganischen Brandschutzmaterials kann unmittelbar nach dem Auftragen des Brandschutzmaterials auf das zu schützende Substrat erfolgen. Bevorzugt wird die Epoxidharzzusammensetzung innerhalb eines Zeitraums von 1 Stunde bis 8 Tagen auf das Brandschutzmaterial aufgebracht, nachdem das Brandschutzmaterial auf das zu schützende Substrat aufgetragen wurde.

Die Schichtdicke der Epoxidharzzusammensetzung auf dem anorganischen Brandschutzmaterial liegt vorzugsweise in einem Bereich von 5 bis 250 µm, bevorzugt 10 bis 200 µm, gemessen in trockenem Zustand nach der Aushärtung der Epoxidharzzusammensetzung.

Das Aufbringen der erfindungsgemäßen Epoxidharzzusammensetzung auf das noch feuchte anorganische Brandschutzmaterial bewirkt eine Verringerung der Trocknungsgeschwindigkeit und damit eine geringere Anfälligkeit für Rissbildung. Gleichzeitig bewirkt die getrocknete und ausgehärtete Epoxidharzzusammensetzung selbst einen effektiven Brandschutz, da die in der Epoxidharzzusammensetzung enthaltene intumeszierende Komponente sowohl das anorganische Brandschutzmaterial als auch das darunterliegende Substrat im Brandfall vor einer Hitzeeinwirkung schützt und damit die Wirkungsdauer des anorganischen Brandschutzmaterials verlängert. Damit kann das anorganische Brandschutzmaterial selbst in geringerer Schichtdicke auf das Substrat aufgetragen werden, wodurch Gewicht und Materialkosten eingespart werden können.

Gegenstand der Erfindung ist somit auch ein Verbundmaterial mit einem Substrat, einem auf dem Substrat aufgebrachten anorganischen Brandschutzmaterial und einer auf dem anorganischen Brandschutzmaterial aufgebrachten Beschichtung, wobei die Beschichtung aus der oben beschriebenen Epoxidharzzusammensetzung gebildet ist.

Die Grenzfläche zwischen dem zu schützenden Substrat, beispielsweise einem Stahlträger, und dem anorganischen Brandschutzmittel kann zusätzlich mit einer Dichtmasse abgedichtet sein. Die Dichtmasse kann vor oder nach der Beschichtung des anorganischen Brandschutzmaterials mit der Epoxidharzzusammensetzung appliziert werden.

Weitere Vorteile der vorliegenden Erfindung ergeben sich aus der nachfolgenden Beschreibung von bevorzugten Ausführungsformen, die jedoch nicht in einem einschränkenden Sinn verstanden werden sollen.

### AUSFÜHRUNGSBEISPIELE

Für die Herstellung der Epoxidharzzusammensetzungen wurden die nachfolgend aufgelisteten Bestandteile verwendet. Es wurden jeweils die Bestandteile der Harzkomponente (A) und der Härterkomponente (B) in getrennten Behältern formuliert und anschließend in einem weiteren Behälter miteinander vermischt und homogenisiert. Das Gewichtsverhältnis der Harzkomponente (A) zur Härterkomponente (B) lag in bei etwa 1 : 3. Das Verhältnis der Epoxidgruppen zu den Amingruppen in der Härterkomponente lag ein einem Bereich von zwischen etwa 2 : 1 bis 1 : 2. Für die Anwendung wurden die Mischungen dann auf ein PTFE-Substrat gegossen, unter Bildung eines Films aus der Epoxidharzzusammensetzung mit einer Schichtdicke von etwa 2 mm.

Zur Bestimmung des Intumeszenzfaktors wurde aus dem Film eine runde Probe mit einem Durchmesser von etwa 5 cm geschnitten und die Schichtdicke h_{P} mit einer Schiebelehre bestimmt (Mittelwert einer Mehrfachmessung). Danach wurde die Probe in eine zylindrische Stahlform mit einer Höhe von 100 mm eingelegt, die Stahlform mit der Probe wurde in einen auf 600°C vorgeheizten Muffelofen eingebracht und 30 min lang erwärmt, wodurch eine aufgeschäumte Aschekruste gebildet wurde. Nach Abkühlen auf Raumtemperatur wurde die Höhe der Aschekruste hs bestimmt (Mittelwert einer Mehrfachmessung). Der Intumeszenzfaktor I ergibt sich aus dem Verhältnis der Höhe hs der Aschekruste und der Schichtdicke h_{P} der Probe vor dem Erwärmen: I = hs/h_{P}.

### Beispiel 1 (Vergleich: entsprechend Beispiel 2 der WO 2015/160959)

**Harzkomponente (A):**

| **Bestandteil** | **Menge** | **Anteil [Gew.%]** | **Lieferant** | **Beschreibung** |
|---|---|---|---|---|
| Epikote™ Resin 828 | 23,9 g | 14,6 | Momentive | Epoxidharz |
| Epikote™ Resin 256 | 77,1 g | 47,1 | Momentive | Wasserbasiertes Epoxidharz |
| GE-8 Reaktivverdünner | 62,7 g | 38,3 | Emerald | C12-C14 Glycidylether; aliphatische, monofunktionelle Epoxidverbindung |

**Härterkomponente (B)**

| **Bestandteil** | **Menge** | **Anteil [Gew.%]** | **Lieferant** | **Beschreibung** |
|---|---|---|---|---|
| Wasser | 174,3 g | 34,6 | n.a. | Träger |
| Xanthan | 0,5 g | 0,1 | Jungbunzlauer | Verdicker |
| Anquamine™ 401 | 103,7 g | 20,6 | Air Products and Chemicals, Inc. | Härter |
| BYK-035 | 2,1 g | 0,4 | BYK | Entschäumer |
| Carbowet 109 | 4,8 g | 1,0 | Air Products and Chemicals, Inc. | Tensid |
| Titandioxid | 71,4 g | 14,2 | Kronos | Weißpigment |
| Zinkoxid | 24,5 g | 4,9 | Merck | Beschleuniger |
| Bariumsulfat | 122,1 g | 24,2 | Minerals I Derivats | Füllstoff |
| Flammruß 101 | 0,5 g | 0,1 | Evonik | Schwarzpigment |

### Beispiel 2 (Gemäß Beispiel 1 - mit intumeszierender Komponente)

**Harzkomponente (A)**

| **Bestandteil** | **Menge** | **Anteil [Gew.%]** | **Lieferant** | **Beschreibung** |
|---|---|---|---|---|
| Epikote™ Resin 828 | 23,2 g | 14,8 | Momentive | Epoxidharz |
| Epikote™ Resin 256 | 71,6 g | 45,7 | Momentive | Wasserbasiertes Epoxidharz |
| GE-8 Reaktivverdünner | 62,0 g | 39,5 | Emerald | C12-C14 Glycidylether; aliphatische, monofunktionelle Epoxidverbindung |

**Härterkomponente (B)**

| **Bestandteil** | **Menge** | **Anteil [Gew.%]** | **Lieferant** | **Beschreibung** |
|---|---|---|---|---|
| Wasser | 174,8 g | 34,0 | n.a. | Träger |
| Xanthan | 0,7 g | 0,1 | Jungbunzlauer | Verdicker |
| Anquamine™ 401 | 104,8 g | 20,4 | Air Products and Chemicals, Inc. | Härter |
| BYK-035 | 2,1 g | 0,4 | BYK | Entschäumer |
| Carbowet 109 | 4,9 g | 1,0 | Air Products and Chemicals, Inc. | Tensid |
| Titandioxid | 35,2 g | 6,9 | Kronos, Inc. | Weißpigment |
| Zinkoxid | 12,7 g | 2,5 | Merck | Beschleuniger |
| Bariumsulfat | 69,3 g | 13,5 | Minerals I Derivats | Füllstoff |
| Flammruß 101 | 0,5 g | 0,1 | Evonik | Schwarzpigment |
| Exolit™ AP 462 | 103,1 | 20,1 | Clariant | Säurebildner |
| Charmor™ PM 40 | 2,6 g | 0,5 | Perstorp | Kohlenstoffquelle |
| Melamin | 2,7 g | 0,5 | OCI Melamine B.V. | Treibmittel |

### Beispiel 3 (Vergleich; entsprechend Beispiel 4 der WO 2015/160959)

**Harzkomponente (A)**

| **Bestandteil** | **Menge** | **Anteil [Gew.%]** | **Lieferant** | **Beschreibung** |
|---|---|---|---|---|
| Epikote™ Resin 828 | 24,1 g | 13,9 | Momentive | Epoxidharz |
| Epikote™ Resin 256 | 42,7 g | 24,7 | Momentive | Wasserbasiertes Epoxidharz |
| DER-732 P | 28,5 g | 16,5 | Dow Chemical | Polares Epoxidharz |
| Carbowet™ 109 | 2,5 g | 1,4 | Air Products and Chemicals, Inc. | Tensid |
| Titandioxid | 75,0 g | 43,4 | Kronos, Inc. | Weißpigment |

**Härterkomponente (B)**

| **Bestandteil** | **Menge** | **Anteil [Gew.%]** | **Lieferant** | **Beschreibung** |
|---|---|---|---|---|
| Wasser | 186,2 g | 49,7 | n.a. | Träger |
| Xanthan | 1,3 g | 0,3 | Jungbunzlauer | Verdicker |
| Anquamine™ 401 | 55,8 g | 14,9 | Air Products and Chemicals, Inc. | Härter |
| DISPERBYK-190 | 3,1 g | 0,8 | BYK | Dispergiermittel |
| BYK-035 | 1,2 g | 0,3 | BYK | Entschäumer |
| Carbowet 109 | 2,0 g | 0,5 | Air Products and Chemicals, Inc. | Tensid |
| Titandioxid | 69,2 g | 18,5 | Kronos | Weißpigment |
| Jeffamine™ D400 | 55,9 g | 14,9 | Huntsman Corp. | Polarer Härter |
| Flammruß 101 | 0,3 g | 0,1 | Evonik | Schwarzpigment |

### Beispiel 4 (Gemäß Beispiel 3 - mit intumeszierender Komponente)

**Harzkomponente (A)**

| **Bestandteil** | **Menge** | **Anteil [Gew.%]** | **Lieferant** | **Beschreibung** |
|---|---|---|---|---|
| Epikote™ Resin 828 | 48,3 g | 17,7 | Momentive | Epoxidharz |
| Epikote™ Resin 256 | 87,0 g | 31,8 | Momentive | Wasserbasiertes Epoxidharz |
| DER-732 P | 57,0 g | 20,8 | Dow Chemical | Polares Epoxidharz |
| Carbowet™ 109 | 5,1 g | 1,9 | Air Products and Chemicals, Inc. | Tensid |
| Titandioxid | 76,0 g | 27,8 | Kronos, Inc. | Weißpigment |

**Härterkomponente (B)**

| **Bestandteil** | **Menge** | **Anteil [Gew.%]** | **Lieferant** | **Beschreibung** |
|---|---|---|---|---|
| Wasser | 372,3 g | 45,3 | n.a. | Träger |
| Xanthan | 2,6 g | 0,3 | Jungbunzlauer | Verdicker |
| Anquamine™ 401 | 111,6 g | 13,6 | Air Products and Chemicals, Inc. | Härter |
| DISPERBYK-190 | 6,2 g | 0,8 | BYK | Dispergiermittel |
| BYK-035 | 2,5 g | 0,3 | BYK | Entschäumer |
| Carbowet 109 | 2,0 g | 0,2 | Air Products and Chemicals, Inc. | Tensid |
| Titandioxid | 68,4 g | 8,3 | Kronos | Weißpigment |
| Jeffamine™ D400 | 111,6 g | 13,6 | Huntsman Corp. | Polarer Härter |
| Flammruß 101 | 0,3 g | 0,04 | Evonik | Schwarzpigment |
| ExolitTM AP 462 | 136,7 g | 16,6 | Clariant | Säurebildner |
| CharmorTM PM 40 | 3,9 g | 0,5 | Perstorp | Kohlestoffquelle |
| Melamin | 3,7 g | 0,5 | OCI Melamine B.V. | Treibmittel |

### Testergebnisse

Die mit den oben beschriebenen Epoxidharzzusammensetzungen erhaltenen Intumeszenzfaktoren sind in der folgenden Tabelle 1 zusammengestellt.

**Tabelle 1: Intumeszenzfaktoren**

| | **Intumeszenzfaktor** | | **Intumeszenzfaktor** |
|---|---|---|---|
| Beispiel 1 (Vergleich) | 1.7 | Beispiel 2 | 5.6 |
| Beispiel 3 (Vergleich) | 0.2 | Beispiel 4 | 11.5 |

Die Ergebnisse zeigen, dass der Zusatz einer intumeszierenden Komponente zur Epoxidharzzusammensetzung bei starker Wärmeeinwirkung zur Ausbildung einer isolierenden Aschekruste führt, die zur Verbesserung der Brandschutzwirkung der Zusammensetzung und des damit beschichteten Brandschutzelements beiträgt.

## Patentansprüche

1. Epoxidharzzusammensetzung auf Wasserbasis zur Beschichtung von anorganischen Brandschutzmaterialien, mit wenigstens einem Epoxidharz, einem Härter für das Epoxidharz, Wasser und wahlweise weiteren Zusätzen, **dadurch gekennzeichnet, dass** die Epoxidharzzusammensetzung ferner wenigstens eine intumeszierende Komponente enthält.

2. Epoxidharzzusammensetzung nach Anspruch 1, **dadurch gekennzeichnet, dass** die intumeszierende Komponente eine chemisch intumeszierende Komponente und/oder eine physikalisch intumeszierende Komponente umfasst.

3. Epoxidharzzusammensetzung nach Anspruch 1 oder 2, **dadurch gekennzeichnet, dass** die intumeszierende Komponente eine chemisch intumeszierenden Komponente mit einer Kohlenstoffquelle, einem Säurebildner einem Treibmittel und wahlweise einem anorganischen Gerüstbildner umfasst.

4. Epoxidharzzusammensetzung nach Anspruch 3, **dadurch gekennzeichnet, dass** die Kohlenstoffquelle eine aus der Gruppe der Saccharide, Oligosaccharide, Polysaccharide, Zuckeralkohole, Alkylpolyole, polymeren sauerstoffhaltigen Verbindungen und Mischungen ausgewählte Verbindung ist, bevorzugt Pentaerythrit, Dipentaerythrit, Tripentaerythrit und deren Mischungen.

5. Epoxidharzzusammensetzung nach Anspruch 3 oder 4, **dadurch gekennzeichnet, dass** der Säurebildner ein Derivat von Schwefelsäure, Phosphorsäure oder Borsäure ist, bevorzugt ein Phosporsäurederivat, weiter bevorzugt ein Ammoniumphosphat, Melaminphosphat, Melaminharzphosphat, Kaliumphosphat, Polyolphosphat und Mischungen davon, besonders bevorzugt Ammoniumpolyphosphat.

6. Epoxidharzzusammensetzung nach einem der Ansprüche 3 bis 5, **dadurch gekennzeichnet, dass** das Treibmittel eine stickstoffhaltige Verbindung ist, bevorzugt Cyanursäure, Isocyanursäure und deren Derivate, Melamin und dessen Derivate, Guanidin und dessen Derivate, Biguanid, Melamincyanurat, ein Cyansäuresalz, ein Cyansäureester, ein Cyansäureamid, Hexamethoxymethylmelamin, Dimelaminpyrophosphat, Melaminpolyphosphat, Melaminphosphat und Mischungen davon.

7. Epoxidharzzusammensetzung nach einem der vorhergehenden Ansprüche, **dadurch gekennzeichnet, dass** die intumeszierende Komponente einen Gerüstbildner umfasst, bevorzugt ein Metallhydroxid und/oder ein Metallborat, besonders bevorzugt Aluminiumtrihydroxid oder Zinkborat und Mischungen davon.

8. Epoxidharzzusammensetzung nach einem der vorhergehenden Ansprüche, **dadurch gekennzeichnet, dass** die intumeszierende Komponente einen Blähgraphit umfasst.

9. Epoxidharzzusammensetzung nach einem der vorhergehenden Ansprüche, **dadurch gekennzeichnet, dass** die intumeszierende Komponente in der Epoxidharzzusammensetzung in einem Anteil von 5 bis 50 Gew.-% enthalten ist, bezogen auf das Gesamtgewicht der Zusammensetzung, bevorzugt in einem Anteil von 10 bis 35 Gew.-%.

10. Epoxidharzzusammensetzung nach einem der vorhergehenden Ansprüche, **dadurch gekennzeichnet, dass** das Epoxidharz einen Bisphenol-A-diglycidylether, einen Bisphenol-F-diglycidylether oder eine Mischung davon umfasst, wahlweise zusammen mit einem Reaktivverdünner, weiter bevorzugt, dass der Härter für das Epoxidharz ein polyfunktionelles Amin und/oder Polyamidoamin umfasst, noch weiter bevorzugt, dass die Zusammensetzung weitere Zusätze aus der Gruppe der anorganischen Füllstoffe, Weichmacher, nichtreaktiven Verdünnungsmittel, Flexibilisatoren, Stabilisatoren, Rheologiehilfsmittel, Netzmittel, Farbstoffe, Pigmente, Entschäumer, Verdicker, Korrosionsschutzmittel und Gemische davon enthält.

11. Epoxidharzzusammensetzung nach einem der vorhergehenden Ansprüche, **dadurch gekennzeichnet, dass** die Zusammensetzung Wasser in einem Anteil von 10 bis 40 Gew.-% enthält, bezogen auf das Gesamtgewicht der Zusammensetzung.

12. Epoxidharzzusammensetzung nach einem der vorhergehenden Ansprüche, **dadurch gekennzeichnet, dass** Epoxidharzzusammensetzung nach einem der vorhergehenden Ansprüche, **dadurch gekennzeichnet, dass** die Zusammensetzung Folgendes umfasst:
das Epoxidharz in einem Anteil von 10 bis 40 Gew.-%,
den Härter in einem Anteil von 10 bis 40 Gew.-%,
den Beschleuniger in einem Anteil von 0 bis 5 Gew.-%,
Wasser in einem Anteil von 10 bis 40 Gew.-%,
die intumeszierenden Komponente in einem Anteil von 5 bis 50 Gew.-%, bevorzugt 10 bis 35 Gew.-%, und
die weiteren Zusätze in einem Anteil von 0 bis 30 Gew.-%,
jeweils bezogen auf das Gesamtgewicht der Zusammensetzung.

13. Verbundmaterial mit einem Substrat, einem auf dem Substrat aufgebrachten anorganischen Brandschutzmaterial und einer auf dem anorganischen Brandschutzmaterial aufgebrachten Beschichtung, wobei das anorganische Brandschutzmaterial ein hydraulisches Bindemittel und einen oder mehrere Füllstoffe umfasst, und wobei die Beschichtung aus der Epoxidharzzusammensetzung gemäß einem der vorhergehenden Ansprüche gebildet ist.

14. Verbundmaterial nach Anspruch 13, **dadurch gekennzeichnet, dass** die Beschichtung aus der Epoxidharzzusammensetzung eine Schichtdicke in einem Bereich von 5 bis 250 µm aufweist, bevorzugt von 10 bis 200 µm, gemessen in trockenem Zustand nach Aushärtung der Epoxidharzzusammensetzung.

15. Verfahren zur Herstellung eines brandgeschützten Substrats, bei dem das anorganische Brandschutzmaterial mit Wasser vermischt und auf das Substrat aufgetragen wird, und anschließend das anorganische Brandschutzmaterial mit der Epoxidharzzusammensetzung gemäß einem der Ansprüche 1 bis 12 beschichtet wird, wobei das anorganische Brandschutzmaterial bei der Beschichtung mit der Epoxidharzzusammensetzung einen Wassergehalt von 20 Gew.-% oder mehr aufweist, bezogen auf das Gewicht des Brandschutzmaterials.
